# EUROPÄISCHE PATENTSCHRIFT

(11) **EP 2 277 655 B1**
(45) Veröffentlichungstag und Bekanntmachung des Hinweises auf die Patenterteilung: **15.05.2013**
(21) Anmeldenummer: 09013534.4
(22) Anmeldetag: 27.10.2009
(51) Int. Cl.: B23K 9/167, B23K 10/00, B23K 10/02

(54) **Verfahren und Vorrichtung zum Plasma-Stichlochschweissen mit Veränderung des Gasvolumenstrom und/oder der Gaszusammensetzung in Abhängigkeit von mindestens einer Randbedingung des Schweissvorganges**
Device and method for plasma keyhole welding with change of the gas volumic flow and/or the gas composition depending of at least one boundary condition of the welding process
Procédé et dispositif destiné au soudage 'keyhole' par plasma avec modification de l'écoulment volumique et/ou de la composition du gaz en fonction de conditions limites du procédé de soudage

(30) Priorität: 16.07.2009 DE 102009027784; 16.07.2009 DE 102009027785
(43) Veröffentlichungstag der Anmeldung: 26.01.2011
(73) Patentinhaber: Linde AG, 80331 München (DE)
(72) Erfinder: Wilhelm, Gerald, Dr., 85716 Unterschleissheim (DE)

(56) Entgegenhaltungen:
- DE-A1-102007 017 224
- JP-A- 61 293 668
- US-A- 4 739 146
- US-A- 5 304 776
- US-A- 5 801 355
- US-B1- 6 255 618

## Beschreibung

Die vorliegende Erfindung betrifft ein Verfahren zum Plasma-Stichlochschweißen eines Werkstücks unter Verwendung wenigstens eines Prozessgases, und eine entsprechende Vorrichtung gemäß dem Oberbegriff der Ansprüche 1 und 13 (siehe, z.B., DE 10 2007 017 224 A1).

Schweißen bezeichnet das stoffschlüssige Verbinden von Bauteilen unter Anwendung von Wärme und/oder Druck, gegebenenfalls unter Verwendung von Schweißzusatzwerkstoffen. Für Metalle, jedoch auch beim Schweißen von Glas oder für thermoplastische Kunststoffe werden meist Schmelzschweißverfahren eingesetzt. Beim Schmelzschweißen wird üblicherweise mit örtlich begrenztem Schmelzfluss ohne Anwendung von Kraft und somit ohne Druck geschweißt. Das Verbinden der Bauteile erfolgt in der Regel in Form von Schweißnähten oder -punkten.

Das Schutzgasschweißen bildet eine Gruppe von Schweißverfahren mit besonders vorteilhaften Eigenschaften, worunter das Plasmaschweißen eine besondere Stellung einnimmt. Das Plasmaschweißen zählt zu den Wolfram-Schutzgas-(WP-) Verfahren, bei denen ein Plasmastrahl als Wärmequelle dient. Der Plasmastrahl wird durch Ionisation und Einschnüren eines Lichtbogens erzeugt, auf ein Werkstück gerichtet und beispielsweise entlang eines gewünschten Schweißnahtverlaufs bewegt. Aufgrund der Einschnürung des Plasmastrahls zu einer fast zylindrischen Gassäule (in der Regel durch eine wassergekühlte Kupferdüse, meist unter Zuhilfenahme eines sogenannten Fokussiergases) ergibt sich eine höhere Energiekonzentration als bei konventionellen Schweißverfahren, wie beispielsweise dem WIG-Schweißen. In einem die Elektrode konzentrisch umgebenden Plasmabrenner können dabei über konzentrische Düsen bis zu drei Gase oder Gasgemische zugeführt werden, darunter das Plasmagas, das Fokussiergas zum Einschnüren des Plasmastrahls und das Schutzgas. Bei den herkömmlichen Verfahren werden der Plasmastrahl und das Fokussiergas von Schutzgas umhüllt. Der Einsatz von Schutzgas dient unter anderem dazu, die Schmelze während des Schweißvorgangs vor Oxidation zu schützen. Das Plasmaschweißen ist ein Schweißverfahren, bei welchem ein eingeschnürter Lichtbogen eingesetzt wird. Beim Plasmaschweißen mit übertragenem Lichtbogen brennt der Lichtbogen zwischen der nicht abschmelzenden Elektrode und dem Werkstück. Durch die Einschnürgung des Lichtbogens werden höhere Energiedichten erreicht als beim herkömmlichen Lichtbogenschweißen mit nichtabschmelzender Elektrode, dem sogenannnten WIG-Schweißen.

Das Plasma-Stichlochschweißen stellt eine Variante des Plasmaschweißens dar. Als Hochleistungsschweißverfahren gestattet es die Bearbeitung größerer Blechdicken mit geringem thermischem Verzug und hohen Schweißgeschwindigkeiten und wird momentan hauptsächlich zum schweißtechnischen Fügen von Chrom-Nickel-Stählen eingesetzt. Zudem wird heute auf diese Technik zurückgegriffen, wenn besondere Anforderungen an die Qualität der Schweißnaht hinsichtlich Durchschweißung, Nahtform und Nahtaussehen gestellt werden. Es wird in der Regel bis zu einer Blechdicke von 8 bis 10 mm eingesetzt. Die hauptsächlichen Anwendungsgebiete liegen im chemischen Anlagenbau, der Luft- und Raumfahrtindustrie sowie dem Behälter- und Rohrleitungsbau.

Beim Plasma-Stichlochschweißen durchtritt der Plasmastrahl zu Beginn des Schweißvorgangs die gesamte Werkstückdicke. Dabei wird das durch Aufschmelzen des Werkstücks entstehende Schmelzbad vom Plasmastrahl zur Seite gedrückt. Die Oberflächenspannung der Schmelze verhindert ein Durchfallen durch das Stichloch. Stattdessen fließt die Schmelze hinter der sich bildenden Schweißöse wieder zusammen und erstarrt zur Schweißnaht.

Beim Plasmastichlochschweißen werden ebenso wie beim Plasmaschweißen bis zu drei Gasströme als Prozessgase eingesetzt. Im Inneren befindet sich das Plasmagas. Durch die hohe Energiedichte im Inneren bildet das Plasmagas den Plasmastrahl aus. Das Plamagas ist in der Regel von einem Schutzgas umgeben, welches zur Hauptaufgabe hat, Plasmastrahl und Bearbeitungsstelle vor unerwünschten Einflüssen aus der Umgebung zu schützen. Weiterhin wird in vielen Fällen auch noch ein sogenanntes Fokussiergas verwendet, welches die Einschnürung und Ausrichtung des Plasmastrahls unterstützt und welches normalerweise zwischen Plasma- und Schutzgas geführt wird.

Unabdingbare Voraussetzung für die Anwendung des Plasma-Stichlochschweißens ist die prozesssichere Ausbildung des Stichloches. Hierzu sind eine, mit hohem zeitlichem Aufwand verbundene, exakte Schweißkantenvorbereitung und eine entsprechende Positionierung der Bauteile sowie das genaue Einhalten der Schweißparameter Grundvoraussetzung. Bei Abweichungen von diesen Randbedingungen, z.B. durch variable Spaltmaße und Kantenversätze sowie Geometriesprünge, die eine veränderliche Wärmeableitung in das Bauteil verursachen, kann es zur ungenügenden Durchschweißung, zur Spritzerbildung, zum Auftreten von Einbrandkerben oder zum Durchsacken des Schweißbades kommen. Gerade bei den am häufigsten verschweißten un- und niedriglegierten Stählen (wie Baustahl) kommt es auch aufgrund starker Variationen der chemischen Zusammensetzung (Legierung) sowie einer geringen Oberflächenspannung und Viskosität vermehrt zum Auftreten dieser Prozessinstabilitäten.

Die Anwendung des Plasma-Stichlochschweißens ist daher momentan nur unter kosten- und zeitintensiven Aufwendungen für die Bauteilvorbereitung und -positionierung möglich. Mit zunehmender Blechdicke reduziert sich ferner die maximal realisierbare Schweißgeschwindigkeit erheblich, zudem nimmt vor allem auch die Stabilität des Schweißprozesses ab. Die insbesondere beim Plasma-Stichlochschweißen von Baustahl dominierende Schwierigkeit einer stabilen Stichlochausbildung schränkt daher die industrielle Anwendbarkeit des Verfahrens auf diesem Gebiet bisher erheblich ein.

Um eine sichere und stabile Ausbildung des Stichloches unter praxisrelevanten Bedingungen wie z.B. langen Lichtbogenzeiten, unterschiedlichen Blechoberflächen, nicht-optimalem Masseanschluss, Schwankungen in der Legierungszusammensetzung und dergleichen zu verbessern, sind unterschiedliche Ansätze bekannt.

Es ist bekannt, bei der Erzeugung von Plasma-Lichtbögen das Plasmagas zu pulsen. So offenbart die EP 257766 A2 ein Verfahren, bei dem der Plasmagasfluss und/oder der Schweißstrom derart hochfrequent moduliert wird, dass eine intermittierende Perforierung des Materials oder Punktschweißung erzielt werden kann.

Zur laufenden Kontrolle der Stichlochausbildung während des Schweißprozesses können optische, pneumatische und/oder elektrische Parameter überwacht werden. So kann die Helligkeit des durchtretenden Plasmastrahls, der aus seiner kinetischen Energie resultierende Druck und/oder die elektrische Leitfähigkeit seines auf der Werkstückrückseite austretenden Anteils (sogenannter Durchdringungsstrom) als Kontrollgröße der Durchschweißung verwendet werden. Die Stichlochausbildung wird dann über eine Variation des Schweißstroms konstant gehalten. Hierzu wird meist der Schweißstrom auf einen Grundlevel eingestellt, und kann bei Bedarf auf einen erhöhten Wert (Pulslevel) angehoben werden, um dem Bauteil mehr Energie zuzuführen. Da die thermische Belastbarkeit der Plasmagasdüse den maximalen Schweißstrom jedoch begrenzt, kann die Leistungsfähigkeit des Plasmabrenners in der Grundstromphase nicht voll ausgenutzt werden, weil jeweils eine "Reserve" für den Pulslevel vorzusehen ist.

Zur Erhöhung der maximalen Schweißgeschwindigkeit und/oder der maximal schweißbaren Blechdicke offenbart die EP 689896 A1 ein Verfahren, bei dem der Volumenstrom des Plasmagases und damit seine Energiedichte über den genannten Schweißprozess mit konstanter Frequenz periodisch verändert wird.

Ferner beinhaltet auch die JP 08039259 A ein Verfahren zum periodischen Variieren des Plasmagases beim Plasma- und Plasmastichlochschweißen im Impulsbetrieb.

Eine periodische Veränderung der Zusammensetzung des Schutzgases beim Schweißen durch Veränderung wenigstens eines Volumenstroms offenbart die US 3484575 A.

Die DE 102007017223 A1 und die DE 102007017224 A1 offenbaren Verfahren zum Plasma-Stichlochschweißen, wobei als Plasmagas und/oder als Schutzgas jeweils eine Gasmischung eingesetzt wird. Mindestens eine Gaszusammensetzung bzw. mindestens ein Gasvolumenstrom werden während des Schweissvorgangs mehrmals zeitlich verändert, wodurch ein zeitlich sich verändernder Staudruck auf die Schmelze ausgeübt und diese dadurch entsprechend in Schwingung versetzt wird. Hierdurch erhöht sich die Prozesstabilität beim Zusammenfliessen der Schmelze hinter dem Stichloch und die Kinematik der Stichlochbildung wird vorteilhaft verändert. Durch die zeitlich veränderliche Zusammensetzung bzw. den zeitlich veränderlichen Gasvolumenstrom des Fokussiergases kann darüber hinaus die Energiedichte des Plasmastrahls variiert werden.

Die US 4739146 A offenbart ein Verfahren zum Aufbringen von Material auf dünne Metallschichten durch Plasmaschweißen. Das Verfahren arbeitet mit hochfrequent überlagerten Strömen geringer Stromstärke, die ausreichen, die Oberfläche des Metalls anzuschmelzen, das Material insgesamt jedoch nicht durchdringen. In die aufgeschmolzene Materialschicht wird dann pulverförmiges Material durch einen Gasstrom eingebracht.

In der US 6255618 B1 ist eine Plasma-Lichtbogenschweißtechnik angegeben, die zum Schweißen eines Metalls geeignet ist, dessen Oberfläche mit einer Substanz bedeckt ist, deren Siedepunkt niedriger ist als der Schmelzpunkt eines Basismetalls. Beim Verschweißen zweier Bleche wird dabei zunächst ein Loch in dem oberen Blech geschaffen, durch das das niedrig siedende Material als Gas entweichen kann.

Die US 5304776 offenbart ein System zum automatischen Schweißen von Rohren. Um ein Durchsacken des Schmelzbades zu verhindern, wird im Rohrinneren ein Druck aufgebaut, der jeweils der auf das Schmelzbad wirkenden Schwerkraft entgegenwirkt.

In der JP 61293668 A wird am Ende eines Schweißvorgangs zur Verbesserung des Schweißergebnisses der Schweißstrom reduziert und ein Prozessgas von Argon in Helium geändert. Gleichzeitig wird der Volumenstrom des Prozessgases erhöht.

Die US 5801355 A betrifft das Plasmaschneiden. Um verbesserte Schweißergebnisse zu erzielen, wird bis zur Durchdringung eines Werkstücks mit einem Plasmastrahl ein oxidatives Gas (Sauerstoff) als Plasmagas verwendet, zum regulären Schweißen hingegen ein nichtoxidatives Gas (Stickstoff).

Der vorliegenden Erfindung liegt daher die Aufgabe zugrunde, ein Verfahren und eine Vorrichtung zum Plasma-Stichlochschweißen zur Verfügung zu stellen, durch das bzw. durch die die Prozessstabilität und Handhabung, insbesondere die Stabilität der Stichlochausbildung, verbessert und/oder die maximal realisierbare Schweißgeschwindigkeit erhöht werden.

Diese Aufgabe wird durch die Merkmale der unabhängigen Patentansprüche 1 und 13 gelöst. Vorteilhafte Ausgestaltungen ergeben sich aus den jeweiligen Unteransprüchen und der nachfolgenden Beschreibung.

Es sei im Rahmen dieser Anmeldung unter "Prozessgas" eines der beim Plasma-Stichlochschweißen verwendeten Gase verstanden, wie etwa ein Plasmagas, ein Fokussiergas und/oder ein Schutzgas oder Formiergas.

Eine "zeitliche Veränderung" der Gaszusammensetzung und/oder des Gasvolumenstroms umfasst insbesondere eine stufenweise, kontinuierliche und/oder durch eine mathematische Funktion beschreibbare Zunahme, Abnahme und/oder Modulation, insbesondere auch eine periodische Veränderung einer Komponente einer Gaszusammensetzung. Die Frequenz, die Phase, die Amplitude und/oder die Grundlinie einer periodisch sich verändernden Gaszusammensetzung und/oder eines periodisch sich verändernden Gasvolumenstroms werden gemäß der Erfindung, aufgrund sich ändernder Randbedingungen verändert.

Unter "Werkstück" seien ein oder mehrere, insbesondere metallische Elemente verstanden, die durch Plasma-Stichlochschweißen bearbeitet werden.

Eine entsprechende Veränderung kann im Rahmen eines Regelkreises erfolgen oder von einem Benutzer, gegebenenfalls auf Grundlage von abgelesenen Messwerten oder aufgrund eines entsprechenden Signals, eingegeben werden. Die Randbedingungen können hierbei auch mehrere oder alle verwendeten Prozessgase betreffen, d.h. eine entsprechende zeitliche Veränderung bewirken, es kann jedoch ebenso vorgesehen sein, dass bestimmte, bekannte oder gemessene Randbedingungen selektiv auf einzelne Prozessgase einwirken. Es sei in diesem Zusammenhang betont, dass die zeitliche Veränderung während des Schweißvorgangs insbesondere durch eine automatische Regelung erfolgen kann. Der Fachmann wird diese Veränderungen von einfachen Einricht- bzw. Optimierungsvorgängen am Beginn eines Schweißprozesses, bei denen eine Zusammensetzung und/oder ein Volumenstrom eines Prozessgases ebenfalls verändert und in der Regel einmalig den Schweißbedingungen und dem Material angepasst werden kann, klar abgrenzen.

Wird die Schmelze unter Anpassung an Randbedingungen, beispielsweise durch eine Veränderung eines (periodisch modulierten) Volumenstroms, in Schwingung versetzt, erhöht sich in besonders vorteilhafter Weise die Prozesstabilität beim Zusammenfließen der Schmelze hinter dem Stichloch. Die Kinematik der Stichlochbildung wird mit dem erfindungsgemäßen Verfahren angepasst an die momentan vorhandenen Bedingungen (adaptiv) verändert. Hierdurch kann die maximal realisierbare Schweißgeschwindigkeit erhöht werden, ohne die Streckenenergie, d.h. den Energieeintrag in das Werkstück bezogen auf die Länge der Schweißnaht signifikant zu erhöhen. Hierdurch wird ein geringerer Verzug des zu schweißenden Materials bewirkt.

Die Randbedingungen umfassen vorteilhafterweise sowohl Eigenschaften des Werkstücks, als auch Parameter des Schweißvorgangs, insbesondere deren Änderung. Bei den Eigenschaften des Werkstücks kann es sich um geometrische und/oder (physiko-)chemische Eigenschaften handeln. Die geometrischen Eigenschaften beinhalten unter anderem die Materialstärke, die Spaltmaße, Abweichungen in der Schweißnahtvorbereitung und den Kantenversatz zwischen Elementen des Werkstücks. Bei den chemischen Eigenschaften kann es sich um Legierungs- oder Materialeigenschaften (z.B. Phasen von Stahl) handeln, die den Schweißvorgang beeinflussen.

Vorteilhafterweise werden die Parameter des Schweißvorgangs und/oder die Eigenschaften des Werkstücks anhand optischer, pneumatischer und/oder elektrischer Eigenschaften des Plasmastrahls (Helligkeit, Druck bzw. Leitfähigkeit) ermittelt. Möglich ist es jedoch auch, die Eigenschaften des Fokussiergases oder des Schutzgases zu ermitteln oder das Verhalten des Schweißprozesses über andere Parameter zu bestimmen, wie beispielsweise Schweißspannung oder Eigenschaften der Schmelze. Insbesondere, wenn sich Charakteristika des Plasmastrahls ändern kann dann durch eine geeignete Anpassung eines Gasvolumenstroms reagiert werden. So kann beispielsweise die Qualität eines Plasmastrahls durch eine Messung des Durchdringungsstroms zwischen einem Werkstück und einer hierunter angebrachten Formiergasschiene beurteilt werden. In Abhängigkeit von den gemessenen Werten kann dann der Volumenstrom eines Gases angepasst werden. Nimmt beispielsweise die Breite eines Schweißspaltes vorhersehbar oder nicht vorhersehbar zu, tritt ein größerer Anteil des Plasmastrahls durch den Schweißspalt. Die für den Schweißvorgang verfügbare Energiemenge nimmt ab, der Durchdringungsstrom erhöht sich. Wird nun auf Grundlage der detektierten Änderung des Durchdringungsstroms eine Änderung eines Gasvolumenstroms vorgenommen, kann die Energiedichte des Plasmastrahls erhöht werden, so dass die in das Werkstück eingebrachte Energie steigt. Bei einer Änderung einer Legierungszusammensetzung kann sich aufgrund einer besseren oder schlechteren Schmelzbarkeit des Materials das Stichloch aufweiten oder verengen. Hierdurch tritt entsprechend ein größerer oder geringerer Anteil des Plasmastrahls durch das Stichloch. Der Durchdringungsstrom erhöht oder verringert sich. Um ein zu großes Stichloch zu verengen oder ein zu kleines Stichloch aufzuweiten, kann dann auf Basis des Durchdringungsstroms eine Veränderung eines Gasvolumenstroms vorgenommen werden, wodurch die Energiedichte des Plasmastrahls verringert oder erhöht werden kann.

Eine Veränderung der Zusammensetzung eines Schweißgases ist durch eine Erhöhung oder Reduzierung der absoluten oder relativen Beiträge einzelner Gase einer Mischung möglich. Beispielsweise kann auch ein erstes Gas mit einem ersten, konstanten Volumenstrom und ein zweites Gas mit einem zweiten, pulsierenden Volumenstrom bereitgestellt werden, wodurch sich entsprechend die Zusammensetzung des sich hieraus ergebenden, gemischten Schweißgases pulsierend verändert. Hiermit kann beispielsweise sich verändernden Materialzusammensetzungen Rechnung getragen werden. Beispielsweise können variable Gemische aus inerten mit aktiven Schweißgasen zum Einsatz kommen, die es ermöglichen, den Schweißprozess im Sinne einer Verbesserung der Plasmastrahlstabilität, der Abschmelzleistung, der Nahtoberfläche, der Vermeidung oder Einschränkung einer Spritzerbildung, von ungünstigen Einbrandformen oder hohen Gasgehalten im Schweißgut positiv zu beeinflussen. Insbesondere durch eine adaptive Veränderung der Zusammensetzung des Plasmagases kann seine Wärmeleitfähigkeit und seine Enthalpie unter Berücksichtigung der Randbedingungen beeinflusst werden.

Die Randbedingungen umfassen vorteilhafterweise sowohl Eigenschaften des Werkstücks, als auch Parameter des Schweißvorgangs, insbesondere deren Änderung. Bei den Eigenschaften des Werkstücks kann es sich um geometrische und/oder (physiko-)chemische Eigenschaften handeln. Die geometrischen Eigenschaften beinhalten unter anderem die Materialstärke, die Spaltmaße, Abweichungen in der Schweißnahtvorbereitung und den Kantenversatz zwischen Elementen des Werkstücks. Bei den chemischen Eigenschaften kann es sich um Legierungs- oder Materialeigenschaften (z.B. Phasen von Stahl) handeln, die den Schweißvorgang beeinflussen. Es kann zwischen vorhersehbaren (bekannten) und nicht vorhersehbaren (unbekannten) Änderungen unterschieden werden, die sowohl die geometrischen als auch die chemischen Eigenschaften betreffen können. Beispielsweise kann bei einer bekannten, kontinuierlichen Zunahme der Dicke des Werkstückes oder einer bekannten Änderung der Materialzusammensetzung durch Anpassung der Zusammensetzung eines Gases ein besonders stabiler Schweißvorgang bewirkt werden.

Vorteilhafterweise umfasst das wenigstens eine Prozessgas, dessen Gasvolumenstrom zeitlich verändert wird, ein Plasmagas, ein Fokussiergas und/oder ein Schutzgas. Durch eine entsprechende Modulation des Plasmagases kann beispielsweise die Energiedichte des Plasmastrahls, und damit die in das Werkstück eingebrachte Energie, beeinflusst werden. Die Veränderung des Volumenstroms des Fokussiergases bewirkt eine stärkere oder schwächere Fokussierung des Plasmastrahls, und damit ebenfalls eine Modulation der Energiedichte. Durch Beeinflussung des Volumenstroms des Schutzgases kann die Schutzwirkung gegen Oxidation angepasst werden, sofern dies, beispielsweise aufgrund eines größeren Schmelzenvolumens oder einer Änderung der Materialzusammensetzung erforderlich ist, und/oder die Stabilität des Schweißprozesses verbessert werden. Sämtliche Prozessgase wirken zusammen bei der Einstellung des Staudrucks auf die Schmelze. Diese kann hierdurch beispielsweise in Schwingung versetzt werden.

Vorteilhafterweise werden die Parameter des Schweißvorgangs und/oder die Eigenschaften des Werkstücks anhand optischer, pneumatischer und/oder elektrischer Eigenschaften des Plasmastrahls ermittelt. Ändern sich Charakteristika des Plasmastrahls, insbesondere aufgrund von nicht vorhersehbaren Änderungen von Eigenschaften des zu schweißenden Werkstücks, kann dann durch eine geeignete Anpassung einer Gaszusammensetzung reagiert werden. So kann beispielsweise die Qualität eines Plasmastrahls durch eine Messung des Durchdringungsstroms zwischen einem Werkstück und einer hierunter angebrachten Formiergasschiene beurteilt werden. In Abhängigkeit von den gemessenen Werten kann dann die Zusammensetzung eines Gases angepasst werden. Nimmt beispielsweise die Breite eines Schweißspaltes vorhersehbar oder nicht vorhersehbar zu, tritt ein größerer Anteil des Plasmastrahls durch den Schweißspalt. Die für den Schweißvorgang verfügbare Energiemenge nimmt ab, der Durchdringungsstrom erhöht sich. Wird nun auf Grundlage der detektierten Änderung des Durchdringungsstroms eine Änderung einer Gaszusammensetzung vorgenommen, kann die Energiedichte des Plasmastrahls erhöht werden, so dass die in das Werkstück eingebrachte Energie steigt. Bei einer Änderung einer Legierungszusammensetzung kann sich aufgrund einer besseren oder schlechteren Schmelzbarkeit des Materials das Stichloch aufweiten oder verengen. Hierdurch tritt entsprechend ein größerer oder geringerer Anteil des Plasmastrahls durch das Stichloch. Der Durchdringungsstrom erhöht oder verringert sich. Um ein zu großes Stichloch zu verengen oder ein zu kleines Stichloch aufzuweiten, kann dann auf Basis des Durchdringungsstroms eine Veränderung einer Gaszusammensetzung vorgenommen werden, wodurch die Energiedichte des Plasmastrahls verringert oder erhöht werden kann.

Vorteilhafterweise umfasst das wenigstens eine Schweißgas, dessen Zusammensetzung zeitlich verändert wird, ein Plasmagas, ein Fokussiergas und/oder ein Schutzgas. Durch eine entsprechende Modulation des Plasmagases kann beispielsweise die Energiedichte des Plasmastrahls, und damit die in das Werkstück eingebrachte Energie, beeinflusst werden. Die Veränderung der Zusammensetzung des Fokussiergases bewirkt eine stärkere oder schwächere Fokussierung des Plasmastrahls, und damit ebenfalls eine Modulation der Energiedichte. Durch Beeinflussung der Zusammensetzung des Schutzgases kann die Schutzwirkung gegen Oxidation angepasst werden, sofern dies, beispielsweise aufgrund eines größeren Schmelzenvolumens oder einer Änderung der Materialzusammensetzung erforderlich ist. Sämtliche Schweißgase wirken zusammen bei der Einstellung des Staudrucks auf die Schmelze. Diese kann hierdurch beispielsweise in Schwingung versetzt werden.

Gemäß einer vorteilhaften Ausgestaltung der Erfindung weist wenigstens eines der Prozessgase, insbesondere das Plasmagas, das Fokussiergas und/oder das Schutzgas mindestens ein Gas aus der Gruppe von Argon, Helium, Stickstoff, Kohlendioxid, Sauerstoff und Wasserstoff auf. Bevorzugt werden demnach als Plasmagas und/oder als Fokussiergas und/oder als Schutzgas Gase oder Gasgemische verwendet, die mindestens ein Gas aus der genannten Gruppe enthalten. Die Festlegung des geeigneten Gases bzw. des geeigneten Gasgemisches erfolgt in Abhängigkeit von der Schweißaufgabe, besonders unter Berücksichtigung des zu schweißenden Grundwerkstoffs und etwaiger Zusatzwerkstoffe, wie zuvor erläutert, in sich adaptiv verändernden Zusammensetzungen.

Es kommen sowohl die Reingase, als auch Zwei-, Drei- und Mehr-KomponentenGemische vorteilhaft zum Einsatz. Hierdurch wird eine besonders selektive Anpassung an die Schweißaufgabe bewirkt.

In vielen Fällen können sich auch dotierte Gasgemische als besonders vorteilhaft erweisen, wobei dotierte Gasgemische Dotierungen mit aktiven Gasen im vpm-Bereich aufweisen. Die Dotierung erfolgt bevorzugt im Bereich von weniger als 2,5, insbesondere 1,0 Volumenprozent, meist weniger als 0,1 Volumenprozent.

Als Dotiergase können aktive Gase wie z.B. Sauerstoff, Kohlendioxid, Stickstoffmonoxid, Lachgas (Distickstoffmonoxid) oder Stickstoff vorteilhaft eingesetzt werden.

Entsprechend einer besonders vorteilhaften Ausgestaltung der Erfindung können der Volumenstrom und die Zusammensetzung wenigstens eines Prozessgases, insbesondere des Plasmagases, des Fokussiergases und / oder des Schutzgases zeitlich verändert werden. Wird die Schmelze unter Anpassung an Randbedingungen, beispielsweise durch eine pulsierende Veränderung eines Volumenstroms, in Schwingung versetzt, erhöht sich in besonders vorteilhafter Weise die Prozesstabilität beim Zusammenfließen der Schmelze hinter dem Stichloch. Die Kinematik der Stichlochbildung wird mit dem erfindungsgemäßen Verfahren angepasst an die momentan vorhandenen Bedingungen (adaptiv) verändert. Wird ein Gasvolumenstrom pulsierend bereitgestellt, kann ein Pulsieren des Plasmastrahls bewirkt werden. Hierdurch kann die maximal realisierbare Schweißgeschwindigkeit erhöht werden, ohne die Streckenenergie, d.h. den Energieeintrag in das Werkstück bezogen auf die Länge der Schweißnaht signifikant zu erhöhen. Hierdurch wird ein geringerer Verzug des zu schweißenden Materials bewirkt. Eine Veränderung der Zusammensetzung eines Prozessgases ist durch eine Erhöhung oder Reduzierung der absoluten oder relativen Beiträge einzelner Gase einer Mischung möglich. Beispielsweise kann auch ein erstes Gas mit einem ersten, konstanten Volumenstrom und ein zweites Gas mit einem zweiten, pulsierenden Volumenstrom bereitgestellt werden, wodurch sich entsprechend die Zusammensetzung des sich hieraus ergebenden, gemischten Prozessgases pulsierend verändert. Hiermit kann beispielsweise sich verändernden Materialzusammensetzungen Rechnung getragen werden. Beispielsweise können variable Gemische aus inerten mit aktiven Prozessgasen zum Einsatz kommen, die es ermöglichen, den Schweißprozess im Sinne einer Verbesserung der Plasmastrahlstabilität, der Abschmelzleistung, der Nahtoberfläche, der Vermeidung oder Einschränkung einer Spritzerbildung, von ungünstigen Einbrandformen oder hohen Gasgehalten im Schweißgut positiv zu beeinflussen. Insbesondere durch eine adaptive Veränderung der Zusammensetzung des Plasmagases kann seine Wärmeleitfähigkeit und seine Enthalpie unter Berücksichtigung der Randbedingungen beeinflusst werden.

An dieser Stelle sei darauf hingewiesen, dass die einfachsten Möglichkeiten zur Veränderung eines Gasvolumenstroms darin bestehen, entweder den Fluss zu verändern oder einen zweiten Gasstrom mit gleicher Gaszusammensetzung zubeziehungsweise wegzuschalten. Entsprechend kann die Gaszusammensetzung durch eine Mischung unterschiedlicher Gase, die in zueinander zeitlich veränderlichen Volumenströmen bereitgestellt werden, verändert werden. Eine Veränderung einer Gaszusammensetzung kann mit einer Volumenstromveränderung einhergehen, wenn beispielsweise ein unterschiedliches Gas zugeschaltet wird.

Vorteilhafterweise wird ferner der Schweißstrom zeitlich verändert, insbesondere mit Impulsstrom geschweißt. Möglich ist auch Schweißen mit Gleich- oder Wechselstrom. Durch eine entsprechende Veränderung, insbesondere unter Anpassung an die genannten Randbedingungen, kann eine zusätzlich verbesserte Adaption an die Schweißaufgabe durch Beeinflussung des Energieeintrags bewirkt werden.

Hierbei sieht eine weitere zweckmäßige Ausgestaltung der Erfindung vor, dass mit pulsierendem Schweißstrom (Impulsstrom) geschweißt wird, wobei jede Periode aus einer Impulsstromphase (Hochstromphase) und einer Grundstromphase (Niedrigstromphase) zusammengesetzt ist. Ein gepulst bereitgestellter Schweißstrom erhöht zusätzlich zu den vorgenannten Maßnahmen die Prozesssicherheit.

Entsprechend einer vorteilhaften Weiterbildung werden die genannten zeitlichen Veränderungen des Gasvolumenstroms, der Zusammensetzung wenigstens eines Prozessgases und/oder des Schweißstroms aufeinander abgestimmt vorgenommen. Vorzugsweise erfolgt eine zeitliche Veränderung der Gaszusammensetzung, eines Gasvolumenstroms wenigstens eines Prozessgases und/oder des Schweißstroms in Abhängigkeit von wenigstens einer weiteren zeitlichen Veränderung einer Gaszusammensetzung, eines Volumenstroms und/oder eines Schweißstroms.

Es sei zu verstehen gegeben, dass eine Veränderung "in Abhängigkeit von wenigstens einer weiteren zeitlichen Veränderung" eine phasengleiche, phasenversetzte, gleich- oder entgegengerichtete Veränderung beinhalten kann, sofern dies zweckmäßig ist.

Beim Schweißen mit pulsierendem Schweißstrom (Impulsstrom) kann etwa der Plasmagasvolumenstrom, der Fokussiergasvolumenstrom und/oder der Schutzgasvolumenstrom synchron oder phasenverschoben zum Impulsstromverlauf zeitlich verändert werden, wodurch eine Adaption an die jeweils in das Material eingebrachte Energie erfolgen kann. Zusätzlich zu der Volumenstromänderung kann auch eine entsprechende Zusammensetzungsänderung erfolgen.

Beim Schweißen mit pulsierendem Schweißstrom (Impulsstrom) kann etwa der Plasmagasvolumenstrom, der Fokussiergasvolumenstrom und/oder der Schutzgasvolumenstrom synchron oder phasenverschoben zum Impulsstromverlauf zeitlich verändert werden, wodurch eine Adaption an die jeweils in das Material eingebrachte Energie erfolgen kann. Zusätzlich zu der Zusammensetzungsänderung kann auch eine entsprechende Volumenstromänderung erfolgen.

Ferner kann beispielsweise vorgesehen sein, dass das Fokussiergas synchron zu wenigstens einem weiteren bereitgestellten Prozessgas, insbesondere synchron zum Plasmagas (dessen Gasvolumenstrom seinerseits durch die Randbedingungen beeinflusst ist), verändert wird. Dies dient insbesondere dazu, Turbulenzen und etwaige ungünstige Vermischungen zwischen Plasmagas und Fokussiergas zu verhindern. Durch eine entsprechende Veränderung kann in besonders vorteilhafter Weise die Energiedichte des Plasmastrahls variiert werden, indem dessen Fokussierung adaptiv verändert wird.

In analoger Weise kann beispielsweise der Gasvolumenstrom des Schutzgases in Abhängigkeit vom Gasvolumenstrom des Plasmagases und/oder des Fokussiergases zeitlich verändert werden. Neben der genannten Verhinderung von Turbulenzen kann durch eine Veränderung des Volumenstroms des Schutzgases dieses angepasst an die übrigen Volumenströme bereitgestellt werden.

Die Veränderung der Zusammensetzungen kann in einer vorteilhaften Ausgestaltung synchron zur Veränderung des Gasvolumenstroms stattfinden. In anderen Fällen kann es jedoch auch von Vorteil sein, Gasvolumenstrom und Zusammensetzungen phasenverschoben zueinander zu verändern. Möglich ist auch, Gasvolumenstrom und Zusammensetzung mit unterschiedlichen Frequenzen zu pulsen.

Vorteilhafterweise erfolgt die zeitliche Veränderung der Gaszusammensetzung, eines Volumenstroms wenigstens eines Prozessgases und/oder des Schweißstroms periodisch mit einer Frequenz im Bereich zwischen 1 und 200 Hz, insbesondere zwischen 12 und 200 Hz, insbesondere zwischen 15 und 100 Hz, vorzugsweise zwischen 20 und 80 Hz. Die (erfindungsgemäße) zeitliche Veränderung abhängig von einer Randbedingung erfolgt dann in Form einer Veränderung dieser Frequenz (oder auch der Amplitude, der Phase oder der Grundlinie). Die Vorteile der Erfindung zeigen sich in ausgeprägter Weise bis hin zu Frequenzen von 200 Hz, besonders ausgeprägt bis 100 Hz und insbesondere bis 80 Hz. Es hat sich insbesondere für das Plasmagas gezeigt, dass bei Frequenzen, die über den vorgenannten Untergrenzen liegen, sich das Plasma infolge seiner Trägheit nahezu kontinuierlich kontrahiert. Die Kontraktion führt zu einer Erhöhung der Energiedichte und daraus resultierend zu einer Erhöhung des verschweißbaren Blechdicken oder zu einer Erhöhung der maximalen Schweißgeschwindigkeit, ohne die Streckenenergie signifikant zu erhöhen.

In einer vorteilhaften Weiterbildung wird die Modulation mit den vorgenannten (niedrigen) Frequenzen mit einem weiteren, hochfrequenten Puls mit einer Frequenz bis zu 10000 Hz, vorzugsweise bis zu 8000 Hz, überlagert. Hierbei kann es sich entweder um ein reines Volumenpulsen handeln, jedoch kann auch ein entsprechendes Pulsen der Zusammensetzung oder ein kombiniertes Pulsen von Volumen und Zusammensetzung vorgesehen sein. Vorteilhafterweise findet jedoch neben dem niederfrequenten Pulsen des Gasvolumenstroms nur ein hochfrequentes Pulsen des Gasvolumenstroms statt. Betroffen von dem zusätzlichen Hochfrequenz-Pulsen können Plasmagas und/oder Fokussiergas und/oder Schutzgas sein. Dieses zusätzliche Hochfrequenz-Pulsen kann während der gesamten Periode des (niederfrequenten) Pulsens oder nur während einer gewissen Zeitspanne innerhalb der Periode erfolgen. Die Frequenzen für das Hochfrequenz-Pulsen des Gasvolumenstroms und/oder der Gaszusammensetzung liegen im Bereich von 100 bis 10000 Hz, vorzugsweise im Bereich von 250 bis 8000 Hz und besonders bevorzugt im Bereich von 500 bis 5000 Hz. Zum Beispiel kann mit besonderem Vorteil einem niederfrequenten Gasvolumenstrom des Plasma- und/oder des Fokussiergases in der Hochphase und/oder in der Niedrigphase ein hochfrequentes Pulsieren des Plasma- und/oder des Fokussiergases überlagert werden. Eine entsprechende Überlagerung kann vorteilhafterweise auch angepasst an sich verändernde Schweiß-Randbedingungen erfolgen.

Zweckmäßigerweise wird die zeitliche Veränderung des Gasvolumenstroms, einer Zusammensetzung wenigstens eines Schweißgases und/oder des Schweißstroms zumindest zum Teil durch ein Rechteckprofil dargestellt. Mit besonderem Vorteil verläuft die zeitliche Veränderung nach einem modifizierten Rechteckprofil, das abgeschrägte Schultern aufweist. Eine andere vorteilhafte Ausgestaltung der Erfindung sieht vor, dass die zeitliche Veränderung des Volumenstroms und/oder der Zusammensetzung zumindest zum Teil durch ein Dreieckprofil oder ein sinusförmiges Profil dargestellt wird.

Eine erfindungsgemäße Vorrichtung zum Plasma-Stichlochschweißen, die eine Elektrode, Mittel zur Versorgung der Elektrode mit Schweißstrom, wenigstens eine Düse und Gasbereitstellungsmittel zum Bereitstellen wenigstens eines Prozessgases mit einem Gasvolumenstrom und einer Gaszusammensetzung aufweist, wobei mittels der Elektrode und des wenigstens einen Prozessgases ein Plasmastrahl erzeugbar ist, und wobei wenigstens ein Gasvolumenstrom und/oder wenigstens eine Gaszusammensetzung zeitlich veränderbar sind, ist gekennzeichnet durch Mittel zum Verändern eines Gasvolumenstroms und/oder einer Gaszusammensetzung wenigstens eines Prozessgases während eines Schweißvorgangs in Abhängigkeit von mindestens einer Randbedingung des Schweißvorgangs.

Die erfindungsgemäße Vorrichtung ist für eine Durchführung des erfindungsgemäßen Verfahrens in besonderer Weise geeignet. Bei den Mitteln zum Verändern des Gasvolumenstroms kann es sich dabei insbesondere um Magnetventile oder piezoelektrische Ventile oder entsprechende, gepulst arbeitende Pumpen oder Mischer handeln.

Durch geeignete Wahl der Kombinationsmöglichkeiten der erfindungsgemäßen Ausgestaltungen kann der Schweißprozess mit besonderem Vorteil aufgabenspezifisch optimiert werden.

Vorteilhafterweise weist eine entsprechende Vorrichtung ferner Mittel zum Bestimmen von Randbedingungen und/oder Randbedingungsänderungen des Schweißvorgangs und/oder Mittel zum Regeln mindestens einer Gaszusammensetzung auf Grundlage solcher Randbedingungen und/oder Randbedingungsänderungen auf.Vorteilhafterweise weist eine entsprechende Vorrichtung ferner Mittel zum Bestimmen von Randbedingungen und/oder Randbedingungsänderungen des Schweißvorgangs und/oder Mittel zum Regeln mindestens eines Gasvolumenstroms auf Grundlage solcher Randbedingungen und/oder Randbedingungsänderungen auf. Als Mittel zum Bestimmen von Randbedingungen können in der Vorrichtung bereits vorhandene Einrichtungen, beispielsweise solche zur optischen, pneumatischen und/oder elektrischen Beurteilung des Plasmastrahls, dienen. Insbesondere die Mittel zum Regeln können dabei Teil einer übergeordneten Regeleinrichtung oder einer entsprechenden Recheneinheit sein.

Bezüglich weiterer Merkmale, Ausgestaltungen und Vorteile der erfindungsgemäßen Vorrichtung sei auf die Erläuterungen bzgl. des erfindungsgemäßen Verfahrens ausdrücklich hingewiesen.

Die Erfindung sowie weitere Ausgestaltungen der Erfindung werden im Folgenden anhand der in den Figuren dargestellten Ausführungsbeispiele näher erläutert. Im Einzelnen zeigt:
- Figur 1: eine schematische Darstellung einer Vorrichtung zum Plasma-Stichlochschweißen gemäß Stand der Technik, und
- Figur 2: Beispiele für eine zeitliche Veränderung von Gasvolumenströmen in Abhängigkeit von Randbedingungen gemäß einer besonders bevorzugten Ausführungsform der vorliegenden Erfindung,
- Figur 3: Beispiele für eine zeitliche Veränderung von Gasvolumenströmen in Abhängigkeit von Randbedingungen gemäß einer besonders bevorzugten Ausführungsform der vorliegenden Erfindung und
- Figur 4: ein weiteres Beispiel für eine zeitliche Veränderung von Gasvolumenströmen in Abhängigkeit von Randbedingungen gemäß einer besonders bevorzugten Ausführungsform der vorliegenden Erfindung.

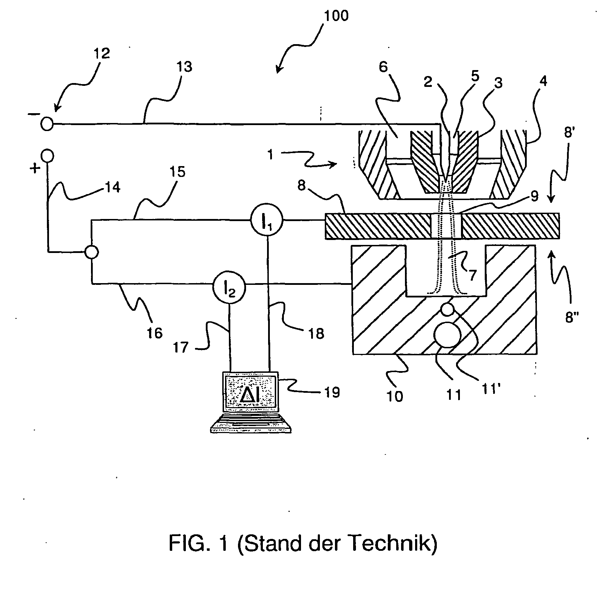

In Figur 1 ist eine Vorrichtung für das Plasma-Stichlochschweißen gemäß Stand der Technik dargestellt und insgesamt mit 100 bezeichnet. Die Vorrichtung verfügt über einen Schweißbrenner 1, der auf ein Werkstück 8 ausgerichtet ist. Der Schweißbrenner 1 weist eine Elektrode 2, vorzugsweise eine nichtabbrennende bzw. nichtabschmelzende Wolframelektrode 2 auf, die mit dem Minuspol einer Schweißstromquelle 12 über Leitung 13 verbunden ist. Die Elektrode 2 ist von einer ersten Düse 3 umgeben, in deren Lumen 5 ein Plasmagas mit einem Volumenstrom und einer Zusammensetzung bereitgestellt wird. Brenner 1 weist eine weitere Düse 4 auf, die die erste Düse und die Elektrode konzentrisch umgibt, und in deren Lumen 6 ein weiteres Prozessgas, beispielsweise ein Fokussiergas und/oder ein Schutzgas mit einem weiteren Volumenstrom und einer weiteren Zusammensetzung bereitgestellt werden kann. Weitere Düsen, in denen weitere Prozessgase bereitgestellt werden können, können vorgesehen sein, sind jedoch der Einfachheit halber nicht dargestellt.

Unter dem Einfluss der Spannung auf die Elektrode 2 in Anwesenheit des Plasmagases 5 bildet sich ein Plasmastrahl 7 aus. In der Figur ist dargestellt, wie der Plasmastrahl 7 das Werkstück 8 durch ein Stichloch 9 von einer Eintrittsseite 8' in Richtung einer Austrittsseite 8" durchdringt. Auf der Austrittsseite 8" des Plasmastrahls 7 ist ein nicht näher erläuterter elektrischer Leiter 10 vorgesehen, der als Teil einer Formiergasschiene ausgebildet sein kann. In dem elektrischen Leiter 10 und/oder in der entsprechenden Formiergasschiene sind Kanäle 11, 11' ausgebildet, bei denen es sich um Kanäle zur Wasserkühlung und/oder um Kanäle handeln kann, mittels derer ein Schutzgas oder ein entsprechendes weiteres Prozessgas bereitgestellt werden kann. Der elektrische Leiter 10 ist über Leitungen 14 und 16, das Werkstück 8 über Leitungen 14 und 15 mit dem positiven Pol der Schweißstromquelle 12 verbunden.

Ferner ist in der Figur 1 eine Mess- bzw. Auswerteeinheit 19, hier als Computer symbolisiert, dargestellt, die bzw. der über Messleitungen 17 und 18 die Ströme I₁ und I₂ zwischen der Elektrode 2 und dem Werkstück 8 bzw.dem Leiter 10 misst. Der Stromfluss I₂ wird als Durchdringungsstrom bezeichnet, der abhängig von veränderlichen Prozessgrößen variabel ist. Der Durchdringungsstrom kann besonders bevorzugt als Indikator für veränderliche Randbedingungen des Schweißvorgangs verwendet werden.

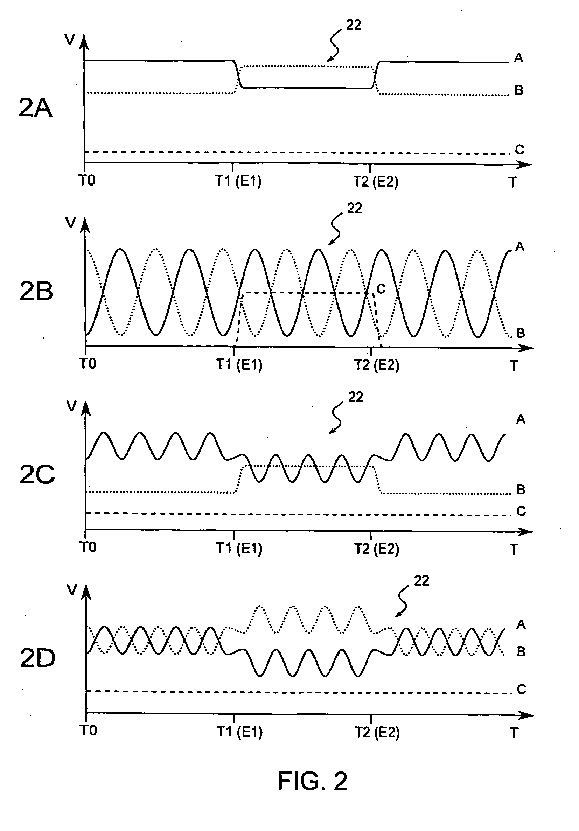

In den Teilfiguren 2A bis 2D (wobei Figur 2A nicht einen Gegenstand der Erfindung darstellt) der Figur 2 ist auf der Abszisse jeweils die Zeit (T) und auf der Ordinate die Größe eines Gasvolumenstroms (V), beispielsweise in Litern pro Sekunde aufgetragen. In allen Teilfiguren sind zeitliche Verläufe von Gaszusammensetzungen 22 von Schweißgasen entsprechend besonders bevorzugter Ausführungsformen der Erfindung dargestellt. Die Gaszusammensetzungen 22 weisen jeweils drei Gaskomponenten A, B und C auf, die zusammen ein Mischgas ergeben. Es versteht sich, dass neben drei Gaskomponenten auch jede beliebige andere Anzahl vorgesehen sein kann, ohne den Rahmen der Erfindung zu verlassen, und dass als Gaskomponenten neben Reingasen auch ihrerseits Gasmischungen zum Einsatz kommen können. Wenigstens eine der Komponenten A, B und C kann auch aus mehreren Gasströmen zusammengesetzt sein, wobei durch Zu- bzw. Wegschalten eines entsprechenden Gasstroms der Gesamtvolumenstrom der Komponente veränderbar ist. Die angegebenen Kurven sind hierbei nicht als maßstabsgerecht anzusehen. Ebenfalls in allen Teilfiguren erfolgt zu bestimmten Zeitpunkten T1 und T2 eine Veränderung von Randbedingungen E1 und E2, die in geeigneter Weise dem System bekanntgegeben wird. Es sei jedoch zu verstehen gegeben, dass neben einer entsprechenden Randbedingungsänderung E1 bzw. E2 zu den Zeitpunkten T1 bzw. T2 auch die Bereitstellung entsprechender anderer Signale erfolgen kann, die in vergleichbarer Weise zu einer Veränderung der Gaszusammensetzung führen. Beispielsweise kann zu einer ersten Zeit T1 eine Randbedingung E1 auf ein erstes Gas, beispielsweise das Plasmagas einwirken, woraufhin dann eine entsprechende Veränderung eines zweiten Gases eingeleitet wird, die von der ersten Veränderung abgeleitet ist. Ferner versteht sich, dass zu den Zeitpunkten T1 bzw. T2 auch beispielsweise Befehle eines entsprechenden zeitlich ablaufenden Schweißprogramms verarbeitet werden können.

Figur 2A, die nicht Gegenstand der Erfindung darstellt, zeigt den zeitlichen Verlauf einer nichtgepulst (kontinuierlich) bereitgestellten Gaszusammensetzung 22. Die Gaszusammensetzung weist von Zeitpunkt T0 an (beispielsweise ab dem Beginn des Schweißprozesses) eine erste Gaszusammensetzung auf, wobei Gaskomponente A die höchste Konzentration, den höchsten Volumenstrom oder den höchsten Partialdruck aufweist (im folgenden als Beitrag bezeichnet). Wird zu einem ersten Zeitpunkt T1 eine erste Randbedingungsänderung E1 detektiert, oder erhält das System ein anderes entsprechendes Signal, das beispielsweise eine Verschmälerung des Schweißspaltes oder eine Abnahme des Durchdringungsstroms kennzeichnet, kann bewirkt werden, dass der Beitrag dieses Gases A abgesenkt wird. Der Beitrag des Gases B wird hingegen erhöht. Beispielsweise kann durch eine entsprechende Absenkung eines schwerer ionisierbaren Gases gegenüber einem leichter ionisierbaren Gases im Plasmagas eine höhere Energiedichte des Plasmastrahls bewirkt werden, wohingegen eine Veränderung in umgekehrter Richtung eine entsprechende Verringerung bewirkt. Die dritte Komponente C, beispielsweise ein Dotiergas, bleibt auf gleichem Niveau. Erfolgt zu einem zweiten Zeitpunkt T2 eine weitere Änderung E2, kehrt das System in den Ausgangszustand zurück, wobei der Beitrag von Komponente A erneut angehoben und der von Komponente B verringert wird. Der Gesamtvolumenstrom der Gasmischung, und damit der auf die Schmelze durch das Schweißgas ausgeübte Staudruck ändert sich in Figur 2A nicht.

In Figur 2B ist gezeigt, wie die Beiträge zweier Gaskomponenten A und B sich jeweils mit einem sinusförmigen Verlauf ändern. Die Phasen der Kurven sind um 180° versetzt, wodurch eine pulsierende Zusammensetzungsänderung bewirkt wird. Analog zur vorigen Figur wird zu Zeitpunkt T1 eine Randbedingungsänderung E1 erkannt. Aufgrunddessen wird nun eine dritte Gaskomponente C, die zuvor nicht Teil der Gasmischung war, zugeschaltet. Wie oben kehrt das System zu Zeitpunkt T2 in den Ausgangszustand zurück. Im Rahmen der Figur 2B erhöht sich zwischen Zeitpunkt T1 und T2 der Gesamtvolumenstrom um den Beitrag des Gases C. Hierdurch kann beispielsweise ein erhöhter Staudruck bewirkt werden.

In Figur 2C wird eine Gaskomponente A fortwährend mit einem sinusförmigen Verlauf gepulst. Eine Gaskomponente C bleibt konstant. Zwischen T1 und T2 wird der Beitrag eines Gases B erhöht, gleichzeitig wird ein Grunddruck der Komponente A abgesenkt (beispielsweise durch Wegschalten einer kontinuierlichen Gasquelle). Die Differenz zwischen Maximal- und Minimalvolumenstrom des Gases A ändert sich hingegen nicht. Damit wird der Gesamtstaudruck der Zusammensetzung 22 (bis auf das kontinuierliche Pulsen) nicht verändert.

In ähnlicher Weise zeigt Figur 2D zwischen den Zeitpunkten T1 und T2 eine Absenkung einer gepulsten Komponente A und eine Anhebung einer gepulsten Komponente B, um den Gesamtstaudruck nicht wesentlich zu verändern.

Es sei zu verstehen gegeben, dass, wenngleich in der Figur 2 jeweils nicht überlagerte Frequenzen dargestellt sind, eine Überlagerung der entsprechenden Kurven, insbesondere mit Hochfrequenzpulsen, in jeder beliebigen Weise erfolgen kann, ohne von der Erfindung abzuweichen. Gleichfalls kann vorgesehen sein, die Wellenformen mit beliebigen weiteren Funktionen zu überlagern. Die Formen für die jeweiligen Verläufe von Plasma-, Fokussier- und Schutzgasvolumenstrom sind in den Teilfiguren der Figur 2 nur schematisch angegeben und als Beispiel zu betrachten. Sie können den aufgabenspezifischen Anforderungen von konkreten Schweißaufgaben Rechnung tragende Anstiegsgeschwindigkeiten, Abfallgeschwindigkeiten, Zwischenimpulse und Schultern (z.B. bei Übergängen) aufweisen.

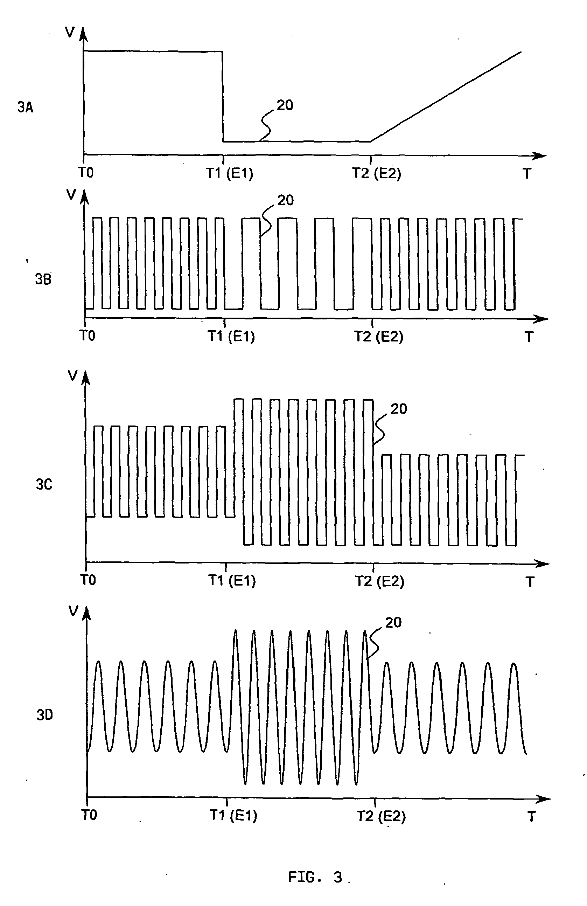

In den Teilfiguren 3A bis 3D der Figur 3 (wobei Figur 3A nicht einen Gegenstand der Erfindung darstellt) ist auf der Abszisse jeweils die Zeit (T) und auf der Ordinate die Größe eines Gasvolumenstroms (V), beispielsweise in Litern pro Sekunde aufgetragen. In allen Teilfiguren sind zeitliche Verläufe von Volumenströmen 20 entsprechend besonders bevorzugter Ausführungsformen der Erfindung dargestellt. Die Volumenströme 20 beziehen sich hierbei insbesondere wahlweise auf die zeitliche Veränderung der Volumenströme von Plasma-, Fokussier- und Schutzgas. Ebenfalls in allen Teilfiguren erfolgt zu bestimmten Zeitpunkten T1 und T2 eine Veränderung von Randbedingungen E1 bzw. E2, die in geeigneter Weise dem System bekanntgegeben wird. Es sei jedoch zu verstehen gegeben, dass neben einer entsprechenden Randbedingungsänderung E1 bzw. E2 zu den Zeitpunkten T1 bzw. T2 auch die Bereitstellung entsprechender anderer Signale erfolgen kann, die in vergleichbarer Weise zu einer Veränderung des Gasvolumenstroms führen. Beispielsweise kann zu einer ersten Zeit T1 eine Randbedingung E1 auf ein erstes Prozessgas, beispielsweise das Plasmagas einwirken, woraufhin dann zur Zeit T2 eine entsprechende (gleiche oder unterschiedliche) Veränderung bezüglich eines zweiten Prozessgases eingeleitet wird, die auf der ersten Randbedingung beruht und von der ersten Veränderung abgeleitet ist. Ferner versteht sich, dass zu den Zeitpunkten T1 bzw. T2 auch beispielsweise Befehle eines entsprechenden zeitlich ablaufenden Schweißprogramms verarbeitet werden können.

Figur 3A, die nicht Gegenstand der Erfindung darstellt, zeigt den zeitlichen Verlauf eines nichtgepulst (kontinuierlich) bereitgestellten Gasvolumenstroms 20. Der Volumenstrom 20 verläuft zwischen Zeitpunkt T0 und T1 zunächst auf einem hohen Niveau. Wird zu einem ersten Zeitpunkt T1 eine erste Randbedingungsänderung E1 detektiert, oder erhält das System ein anderes entsprechendes Signal, das beispielsweise eine Verschmälerung des Schweißspaltes oder eine Abnahme des Durchdringungsstroms kennzeichnet, kann bewirkt werden, dass der Gasvolumenstrom, beispielsweise der Gasvolumenstrom des Plasmagases, auf ein niedrigeres Niveau abgesenkt wird. Erfolgt zu einem zweiten Zeitpunkt T2 eine weitere Änderung E2, kann nun beispielsweise bewirkt werden, dass der entsprechende Gasvolumenstrom langsam und kontinuierlich auf sein ursprüngliches Niveau zurückkehrt. Durch diese Veränderung in Form eines kontinuierlichen Anstiegs kann etwa einer kontinuierlich zunehmenden Materialdicke entsprochen werden.

In Figur 3B ist gezeigt, wie ein einem Rechteckprofil folgender Verlauf eines Gasvolumenstroms 20 zu Zeitpunkt T1 (entsprechend einer Randbedingungsänderung E1) bezüglich seiner Frequenz geändert wird. Nach einer Bestimmung einer weiteren Veränderung der Randbedingungen E2 zum Zeitpunkt T2 kehrt das System zum ursprünglichen Verlauf des Gasvolumenstroms 20 zurück. Hierdurch kann beispielsweise eine unterschiedliche Frequenz der Schwingungen im Schweißbad bewirkt werden, womit Viskositätsänderungen ausgeglichen werden können.

Figur 3C zeigt in analoger Weise, wie zu einem ersten Zeitpunkt T1 (entsprechend E1) ein Rechtecksignal eines Gasvolumenstroms 20 bezüglich seiner Amplitude geändert wird, beispielsweise um eine stärkere Schwingung zu bewirken. Zu einem zweiten Zeitpunkt T2 (entsprechend E2) wird die Amplitude dann auf das ursprüngliche Niveau abgesenkt, wobei in der Figur zudem ein Grundlinienversatz dargestellt ist. Dies kann beispielsweise durch Wegschalten einer kontinuierlich arbeitenden Gasquelle bewirkt werden, wodurch der Gesamtstaudruck auf die Schmelze verringert werden kann.

In ähnlicher Weise zeigt Figur 3D zwischen dem Zeitpunkt T1 und T2 eine Erhöhung der Amplitude und eine gleichzeitige Erhöhung der Frequenz eines entsprechenden sinusoidalen Signals eines Gasvolumenstroms 20.

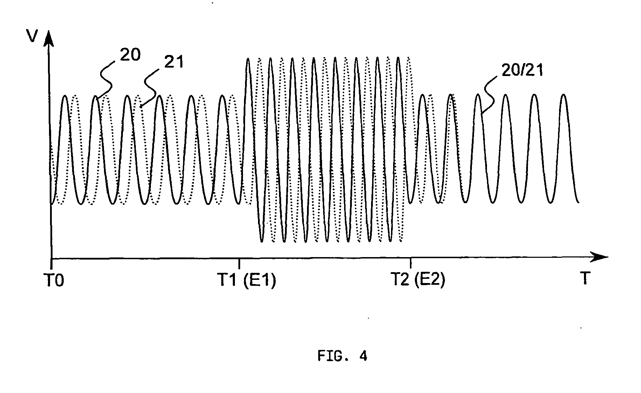

Figur 4 zeigt zwei sinusoidale Signale von Gasvolumenströmen 20, 21 von entsprechenden unterschiedlichen Prozessgasen, beispielsweise des Plasmagases einerseits und des Fokussiergases andererseits. Zwischen den Zeitpunkten T0 und T1 sind die Signale 20 und 21 um etwa 120° phasenverschoben. Durch eine bei Zeitpunkt T1 detektierte Änderung einer oder mehrerer Randbedingungen E1 wird die Amplitude und gleichzeitig die Frequenz beider Gasvolumenströme 20 und 21 erhöht. Zudem erfolgt eine Verschiebung der Phasen, die nunmehr um 180° gegeneinander versetzt sind. Zum Zeitpunkt T2 wird erneut eine Randbedingungsänderung E2 festgestellt. Frequenz, Amplitude und Phasen der Signale 20 und 21 werden erneut geändert. Ab dem Zeitpunkt T2 verlaufen die Signale der Gasvolumenströme 20 und 21 in der beispielhaften Darstellung der Figur 4 nach einer Einschwingphase phasengleich und mit gleicher Frequenz und Amplitude.

Es sei zu verstehen gegeben, dass, wenngleich in den Figuren 3 und 4 jeweils nicht überlagerte Frequenzen dargestellt sind, eine Überlagerung der entsprechenden Kurven, insbesondere mit Hochfrequenzpulsen, in jeder beliebigen Weise erfolgen kann, ohne von der Erfindung abzuweichen. Gleichfalls kann vorgesehen sein, die Wellenformen mit beliebigen weiteren Funktionen zu überlagern. Die Formen für die jeweiligen Verläufe von Plasma-, Fokussier- und Schutzgasvolumenstrom sind in den Teilfiguren der Figur 3 und in Figur 4 nur schematisch angegeben und als Beispiel zu betrachten. Sie können den aufgabenspezifischen Anforderungen von konkreten Schweißaufgaben Rechnung tragende Anstiegsgeschwindigkeiten, Abfallgeschwindigkeiten, Zwischenimpulse und Schultern (z.B. bei Übergängen) aufweisen.

## Patentansprüche

1. Verfahren zum Plasma-Stichlochschweißen eines Werkstücks unter Verwendung wenigstens eines Prozessgases, wobei die Gaszusammensetzung (22) und/oder wenigstens ein Gasvolumenstrom (20, 21) des Prozessgases zeitlich periodisch verändert werden, **dadurch gekennzeichnet, dass** die Frequenz, die Phase, die Amplitude und/oder die Grundlinie der periodisch veränderten Gaszusammensetzung (22) und/oder des periodisch veränderten Gasvolumenstroms (20, 21) des wenigstens einen Prozessgases während eines Schweißvorgangs in Abhängigkeit von mindestens einer Randbedingung (E1, E2) des Schweißvorgangs zeitlich verändert werden.

2. Verfahren nach Anspruch 1, **dadurch gekennzeichnet, dass** als Randbedingungen Eigenschaften des Werkstücks und/oder Parameter des Schweißvorgangs verwendet werden.

3. Verfahren nach Anspruch 2, **dadurch gekennzeichnet, dass** die Parameter des Schweißvorgangs und/oder die Eigenschaften des Werkstücks anhand optischer, pneumatischer und/oder elektrischer Eigenschaften des Plasmastrahls ermittelt werden.

4. Verfahren nach einem der vorstehenden Ansprüche, **dadurch gekennzeichnet, dass** wenigstens ein Prozessgas verwendet wird, das ein Gas aufweist, das aus der Gruppe ausgewählt ist, die aus Argon, Helium, Stickstoff, Kohlendioxid, Sauerstoff und Wasserstoff besteht.

5. Verfahren nach einem der vorstehenden Ansprüche, **dadurch gekennzeichnet, dass** wenigstens ein Prozessgas verwendet wird, das ein Reingas oder eine Gasmischung aus zwei, drei oder mehreren Gasen ist.

6. Verfahren nach einem der vorstehenden Ansprüche, **dadurch gekennzeichnet, dass** wenigstens ein Prozessgas verwendet wird, das ein Dotiergas in einem Volumenanteil von weniger als 2,5, insbesondere weniger als 1,0 Volumenprozent, insbesondere in einem Volumenanteil von weniger als 0,1 Volumenprozent aufweist.

7. Verfahren nach einem der vorstehenden Ansprüche, **dadurch gekennzeichnet, dass** wenigstens ein Prozessgas verwendet wird, das ein Dotiergas aufweist, das aus der Gruppe ausgewählt ist, die aus Sauerstoff, Kohlendioxid, Stickstoffmonoxid, Distickstoffmonoxid und Stickstoff besteht.

8. Verfahren nach einem der vorstehenden Ansprüche, **dadurch gekennzeichnet, dass** mit Impulsstrom geschweißt wird.

9. Verfahren nach einem der vorstehenden Ansprüche, **dadurch gekennzeichnet, dass** ferner der Schweißstrom zeitlich verändert wird.

10. Verfahren nach einem der vorstehenden Ansprüche, **dadurch gekennzeichnet, dass** eine zeitliche Veränderung der Gaszusammensetzung (22), eines Volumenstroms wenigstens eines Schweißgases und/oder des Schweißstroms in Abhängigkeit von wenigstens einer weiteren zeitlichen Veränderung eines Gasvolumenstroms, einer Zusammensetzung und/oder eines Schweißstroms vorgenommen wird.

11. Verfahren nach einem der vorstehenden Ansprüche, **dadurch gekennzeichnet, dass** der Gasvolumenstrom (20, 21) und/oder eine Zusammensetzung wenigstens eines Prozessgases periodisch mit einer Frequenz zwischen 1 und 200 Hz, insbesondere zwischen 12 und 200 Hz, insbesondere zwischen 15 und 100 Hz, weiter insbesondere zwischen 20 und 80 Hz, moduliert wird.

12. Verfahren nach Anspruch 11, **dadurch gekennzeichnet, dass** die zeitlich periodische Modulation mit einer zusätzlichen zeitlich periodischen Modulation mit einer Frequenz bis zu 10000 Hz, vorzugsweise bis zu 8000 Hz, überlagert wird.

13. Vorrichtung zum Plasma-Stichlochschweißen, die eine Elektrode, Mittel zur Versorgung der Elektrode mit Schweißstrom, wenigstens eine Düse und Gasbereitstellungsmittel zum Bereitstellen wenigstens eines Prozessgases mit einem Gasvolumenstrom und einer Gaszusammensetzung aufweist, wobei mittels der Elektrode und des wenigstens einen Prozessgases ein Plasmastrahl erzeugbar ist, und wobei wenigstens ein Gasvolumenstrom (20, 21) und/oder wenigstens eine Gaszusammensetzung zeitlich periodisch veränderbar sind, **gekennzeichnet durch** Mittel zum Verändern der Frequenz, die Phase, der Amplitude und/oder der Grundlinie einer periodisch veränderten Gaszusammensetzung (22) und/oder eines periodisch veränderten Gasvolumenstroms (20, 21) wenigstens eines Prozessgases während eines Schweißvorgangs in Abhängigkeit von mindestens einer Randbedingung (E1, E2) des Schweißvorgangs.

14. Vorrichtung nach Anspruch 13, die ferner Mittel zum Bestimmen von Randbedingungen (E1, E2) und/oder Randbedingungsänderungen (E1, E2) des Schweißvorgangs aufweist.

15. Vorrichtung nach Anspruch 13 oder 14, die ferner Mittel zum Regeln mindestens einer Gaszusammensetzung (22) und / oder eines Gasvolumenstroms (20, 21) auf Grundlage von Randbedingungen (E1, E2) und/oder Randbedingungsänderungen (E1, E2) des Schweißvorgangs aufweist.

## Claims

1. Method for plasma keyhole welding of a workpiece using at least one process gas, wherein the gas composition (22) and/or at least one volumetric gas flow (20, 21) of the process gas are changed periodically, **characterized in that** the frequency, the phase, the amplitude and/or the baseline of the periodically changed gas composition (22) and/or of the periodically changed volumetric gas flow (20, 21) of the at least one process gas are changed over time during a welding process in dependence on at least one boundary condition (E1, E2) of the welding process.

2. Method according to Claim 1, **characterized in that** properties of the workpiece and/or parameters of the welding process are used as boundary conditions.

3. Method according to Claim 2, **characterized in that** the parameters of the welding process and/or the properties of the workpiece are determined on the basis of optical, pneumatic and/or electrical properties of the plasma jet.

4. Method according to one of the preceding claims, **characterized in that** at least one process gas that comprises a gas selected from the group consisting of argon, helium, nitrogen, carbon dioxide, oxygen and hydrogen is used.

5. Method according to one of the preceding claims, **characterized in that** at least one process gas that is a pure gas or a gas mixture of two, three or more gases is used.

6. Method according to one of the preceding claims, **characterized in that** at least one process gas that comprises a doping gas in a proportion by volume of less than 2.5, in particular less than 1.0, percent by volume, in particular in a proportion by volume of less than 0.1 percent by volume, is used.

7. Method according to one of the preceding claims, **characterized in that** at least one process gas that comprises a doping gas selected from the group consisting of oxygen, carbon dioxide, nitrogen monoxide, dinitrogen monoxide and nitrogen is used.

8. Method according to one of the preceding claims, **characterized in that** welding is carried out with a pulsed current.

9. Method according to one of the preceding claims, **characterized in that** the welding current is also changed over time.

10. Method according to one of the preceding claims, **characterized in that** a change over time of the gas composition (22), a volumetric flow of at least one welding gas and/or the welding current is performed in dependence on at least one further change over time of a volumetric gas flow, a composition and/or a welding current.

11. Method according to one of the preceding claims, **characterized in that** the volumetric gas flow (20, 21) and/or a composition of at least one process gas is modulated periodically at a frequency of between 1 and 200 Hz, particularly between 12 and 200 Hz, particularly between 15 and 100 Hz, more particularly between 20 and 80 Hz.

12. Method according to Claim 11, **characterized in that** the periodic modulation is superimposed with an additional periodic modulation at a frequency of up to 10 000 Hz, preferably up to 8000 Hz.

13. Device for plasma keyhole welding, which comprises an electrode, means for supplying the electrode with welding current, at least one nozzle and gas provision means for providing at least one process gas with a volumetric gas flow and a gas composition, wherein a plasma jet can be generated by means of the electrode and the at least one process gas, and wherein at least one volumetric gas flow (20, 21) and/or at least one gas composition can be periodically changed, **characterized by** means for changing the frequency, the phase, the amplitude and/or the baseline of a periodically changed gas composition (22) and/or of a periodically changed volumetric gas flow (20, 21) of at least one process gas during a welding process in dependence on at least one boundary condition (E1, E2) of the welding process.

14. Device according to Claim 13, which also comprises means for determining boundary conditions (E1, E2) and/or changes in boundary conditions (E1, E2) of the welding process.

15. Device according to Claim 13 or 14, which also comprises means for controlling at least one gas composition (22) and/or a volumetric gas flow (20, 21) on the basis of boundary conditions (E1, E2) and/or changes in boundary conditions (E1, E2) of the welding process.

## Revendications

1. Procédé de soudage au plasma du trou de coulée d'une pièce par recours à au moins un gaz de traitement, dans lequel la composition (22) du gaz et/ou au moins un débit volumique (20, 21) du gaz de traitement peuvent être modifiés périodiquement, **caractérisé en ce que**
pendant une opération de soudage, la fréquence, la phase, l'amplitude et/ou la ligne de base de la composition (22) modifiées périodiquement et/ou du débit volumique (20, 21) modifié périodiquement du ou des gaz de traitement sont modifiés au cours du temps en fonction d'au moins une condition limite (E1, E2) de l'opération de soudage.

2. Procédé selon la revendication 1, **caractérisé en ce que** les conditions limites qu'il utilise sont des propriétés de la pièce et/ou des paramètres de l'opération de soudage.

3. Procédé selon la revendication 2, **caractérisé en ce que** les paramètres de l'opération de soudage et/ou les propriétés de la pièce sont déterminés à l'aide de propriétés optiques, pneumatiques et/ou électriques du faisceau de plasma.

4. Procédé selon l'une des revendications précédentes, **caractérisé en ce qu'**il utilise au moins un gaz de traitement qui contient un gaz sélectionné dans l'ensemble constitué de l'argon, de l'hélium, de l'azote, du dioxyde de carbone, de l'oxygène et de l'hydrogène.

5. Procédé selon l'une des revendications précédentes, **caractérisé en ce qu'**il utilise au moins un gaz de traitement qui est un gaz pur ou un mélange de deux, trois ou plusieurs gaz.

6. Procédé selon l'une des revendications précédentes, **caractérisé en ce qu'**il utilise au moins un gaz de traitement qui présente un gaz de dopage à une teneur volumique d'au moins 2,5 pourcent en volume, en particulier inférieure à 1,0 pourcent en volume et en particulier à une proportion volumique de moins de 0,1 pourcent en volume.

7. Procédé selon l'une des revendications précédentes, **caractérisé en ce qu'**il utilise au moins un gaz de traitement sélectionné dans l'ensemble constitué de l'oxygène, du dioxyde de carbone, du monoxyde d'azote, du monoxyde de diazote et de l'azote.

8. Procédé selon l'une des revendications précédentes, **caractérisé en ce que** le soudage s'effectue par courant pulsé.

9. Procédé selon l'une des revendications précédentes, **caractérisé en ce que** le courant de souage est en outre modifié au cours du temps.

10. Procédé selon l'une des revendications précédentes, **caractérisé en ce qu'**une modification au cours du temps de la composition (22) du gaz, du débit volumique d'au moins un gaz de soudage et/ou du courant de soudage sont réalisés en fonction d'au moins une autre modification du débit volumique de gaz, de la composition et/ou du courant de soudage au cours du temps.

11. Procédé selon l'une des revendications précédentes, **caractérisé en ce que** le débit volumique (20, 21) du gaz et/ou la composition d'au moins un gaz de traitement sont modulés périodiquement à une fréquence comprise entre 1 et 200 Hz, notamment entre 12 et 200 Hz, en particulier entre 15 et 100 Hz et de manière encore plus particulière entre 20 et 80 Hz.

12. Procédé selon la revendication 11, **caractérisé en ce qu'**une modulation périodique supplémentaire d'une fréquence pouvant atteindre 10 000 Hz et de préférence 8 000 Hz est superposée à la modulation périodique.

13. Ensemble de soudage d'un trou de coulée au plasma, présentant une électrode, des moyens d'alimentation de l'électrode en courant de soudage, au moins une tuyère et un moyen de préparation de gaz qui prépare au moins un gaz de traitement à un débit volumique et une composition, un faisceau de plasma pouvant être formé au moyen de l'électrode et du ou des gaz de traitement et au moins un débit volumique (20, 21) et/ou au moins une composition du gaz pouvant être modifiés périodiquement au cours du temps,
**caractérisé par**
des moyens de modification de la fréquence, de la phase, de l'amplitude et/ou de la ligne de base de la composition (22) modifiées périodiquement et/ou du débit volumique (20, 21) modifié périodiquement du ou des gaz de traitement sont modifiés au cours du temps en fonction d'au moins une condition limite (E1, E2) de l'opération de soudage.

14. Ensemble selon la revendication 13, présentant en outre des moyens de détermination des conditions aux limites (E1, E2) et/ou de modifications des conditions aux limites (E1, E2) de l'opération de soudage.

15. Ensemble selon les revendications 13 ou 14, contenant en outre des moyens de régulation d'au moins une composition (22) et/ou d'un débit volumique (20, 21) du gaz sur base des conditions aux limites (E1, E2) et/ou de modifications des conditions aux limites (E1, E2) de l'opération de soudage.
